# EUROPEAN PATENT SPECIFICATION

(11) **EP 2 261 505 B1**
(45) Date of publication and mention of the grant of the patent: **27.07.2016**
(21) Application number: 10164556.2
(22) Date of filing: 01.06.2010
(51) Int. Cl.: F03D 80/00

(54) **Wind power installation**
Windkraftanlage
Eolienne

(30) Priority: 02.06.2009 NL 1037009
(43) Date of publication of application: 15.12.2010
(73) Proprietor: Euroba Holding B.V., 6417 CP Heerlen (NL)
(72) Inventor: Eurlings, Robert Maria Joseph Hubert, 6417 CP, HEERLEN (NL)
(74) Representative: Algemeen Octrooi- en Merkenbureau B.V.

(56) References cited:
- CA-A1- 2 462 065
- DE-A1- 19 636 240
- DE-U1- 29 520 150
- GB-A- 2 417 761

## Description

The invention relates to a wind power installation comprising a frame and an electricity pylon comprising near ground level an at least partly pyramid shaped basis for supporting a mast carrying cable supporting arms, which basis comprises supports anchored in foundation elements.

The invention further relates to a frame.

In addition, the invention further relates to a method for assembling a wind power installation.

Such a wind power installation is known from DE-198.02.210 A1. This document describes a partly pyramid shaped electricity pylon on which mast end a frame for carrying a wind turbine has been mounted. The frame comprises a metal plate attached to the top mast end. On the metal plate, a steel tube is vertically fixed for carrying the wind turbine.

A drawback of the known wind power installation is that a conventional electricity pylon is not configured to absorb forces generated by the wind catching wind turbine on top of the electricity pylon. By providing the frame on the mast end of the electricity pylon a top heavy installation is provided. Especially during stormy or windy weather conditions there is a potential danger that the construction known from DE-198.02.210 A1 will become unsafe and unstable.

It is an object of the invention to provide a safe constructed and more stable wind power installation able to carry a wind turbine at relatively high heights, i.e. at least above cable supporting arms of an electricity pylon.

This object is achieved with the wind power installation according to the present invention comprising the features mentioned in claim 1.

By providing an independent frame the wind mill turbine can be positioned relatively high and at least above the cable supporting arms, whereas loads to the electricity pylon generated by the wind mill turbine are minimized as these forces are mainly or completely absorbed with the independent frame having its own supporting members fixed to the foundation elements in the ground. As a result of the independent frame for carrying the wind turbine any conventional available electricity pylon may be used.

By providing an independent frame that can be mounted over the existing electricity pylon an easy and relatively cheap to assemble wind power installation is provided by using an existing electricity pylon. Further, the electricity generated by means of the wind turbine can be easily transported by means of the electricity pylon connected to the electricity network.

Further, by using an existing electricity pylon to build a wind power installation offers the advantage that these existing electricity pylons are mostly situated in non domestic areas. In addition there are often building restrictions under and near existing electricity pylons such that noise emission from turbines will create minimum of noise hassle.

DE19636240 describes a wind power installation comprising an electricity pylon and lifting means for lifting a frame for a wind turbine from ground level to operation level. The frame comprising the wind turbine is carried by the electricity pylon.

The frame of the wind power installation according to the present invention comprises supporting members which during assembling are mountable over the basis of said electricity pylon for fixing these supporting members to the foundation elements to provide an independent frame for carrying a wind turbine above cable supporting arms of said electricity pylon. Mountable over means that the supporting members are positioned over the supporting members such that the supporting members of the frame at least partly surround said basis of said electricity pylon. According to the invention the frame must be fixed to the foundation elements such that the frame carries in its substantially vertically erected state a wind turbine above the cable supporting arms of said electricity pylon independently. Optionally the frame may also be connected to said electricity pylon.

It is necessary for the wind turbine to be situated at least 25 metres above ground level to be economically efficient with regard to generating electric energy.

The wind turbine may be a vertical axis wind turbine, e.g. of the Darrieus type or a horizontal axis wind turbine.

An electricity pylon comprises at least a pyramid shaped supporting basis comprising supports and foundation elements, wherein the basis forms the lower part of the electricity pylon. At a certain height not far from ground level the supports of the basis extend into the mast. The transition between the basis and the mast may be angular or smooth. The basis only comprises a lower part of a pyramid, i.e. the basis does not have an apex. The pyramid shaped basis has a polygonal base formed by the foundation elements which base may be square having four supports and foundation elements or triangular having three supports and foundation elements or pentagonal having five supports and foundation elements. The frame needs to be dimensioned such that supporting members are at least partly mountable over the basis of the electricity pylon. Therefore, the dimensions of the frame depend on the dimensions of electricity pylons.

A preferred embodiment according to the present invention is characterized in that at least one supporting member is pivotally attachable about a pivot axis to the basis in such a way that the frame is movably by pivoting the frame over said pivot axis from a first position in which the frame extends substantially horizontal to a second position in which the frame extends substantially vertical.

The wind power installation can be easily erected by pivoting the frame from the first horizontal position to a second vertical position. Further, the frame may comprise a leverage point at a distance of the pivot axis, which leverage point is connectable to a for example hydraulic operated apparatus for pivoting the frame from a first position to a second position such that the forces needed to erect the frame are minimal.

In addition, if the wind turbine needs maintenance or replacement the frame carrying the wind turbine may be pivoted from a second position back to the first position such that the work may be performed at ground level. Working at ground level does not only minimize costs but also offers more safety to maintenance personnel. During maintenance of the wind turbine pivoted back into the first horizontal position of the frame, the electricity pylon is able to be in an operating modus, i.e. transporting electricity across the land.

The frame preferably comprises four supporting members which are mountable by pivoting them over a square pyramid shaped basis mainly formed by four supports of the electricity pylon, which supports are anchored in foundation elements. Each support forms a corner of the square pyramid shaped base of the electricity pylon. If necessary to form a stable fundament for the frame, which frame is able to carry the wind turbine independent from the electricity pylon, the existing foundations elements may be expanded or reinforced.

Further, it is possible that the wind turbine is automatically physically connected or disconnected by means of connectors to the cables of the electricity network during pivoting the frame from a first position to a second position or vice versa.

Another embodiment according to the present invention is characterized in that in the second position all supporting members of the frame are detachably fixable to the foundation elements:

Further, in the second position the frame may be detachably attached to the basis and/or the mast of said electricity pylon.

In this way the frame may be rigidly connected to the electricity pylon such that a strong construction is provided such that the frame is able to carry the wind turbine in a stable manner under all weather conditions. Further, the connections are detachably such that the frame may be pivoted back from the second position to the first position, e.g. for maintenance services to be performed or replacement of the wind turbine.

A further embodiment according to the present invention is characterized in that the frame is dimensioned such that the supporting members of the frame are able to at least partly surround said electricity pylon and a part of the frame above the supporting members is dimensioned such that this part is able to be mounted between electricity cables carried by cable supporting arms of said electricity pylons.

The frame offers the advantage that during erecting the wind power installation an existing electricity pylon does not need to be cut off from the electricity network. Preferably, the part of the frame comprising a mid section and a top section, i.e. sections which in a second position of the frame are situated at a height equal or above the cable supporting arms of the electricity pylon, are dimensioned such that during pivoting the frame from a first position to a second position or vice versa these sections are freely moveable between cables if present carried by cable supporting arms of supporting arms on opposing sides of the electricity pylon. Preferably, the distance of the frame's mid sections and top sections between the centre line of the frame to the nearest outside of the frame is smaller than the minimal distance between a cable carried by a supporting arm and the centre line of the electricity pylon.

A further object of the invention is to provide a method for assembling a wind power installation.

This object is achieved with the method according to the present invention in that:
- mounting a frame comprising supporting members over an at least partly pyramid shaped basis of an electricity pylon which basis comprises supports anchored in foundation elements of said electricity pylon, which frame is able to carry a wind turbine above cable supporting arms of said electricity pylon,
- fixing these supporting members of the frame to the foundation elements of said electricity pylon.

By mounting a frame over the electricity pylon for carrying a wind turbine, the frame may independently carry the wind turbine and absorbs all forces exerted thereon. In this way independent of the maximum load specifications of the electricity pylon a stable wind power installation of the present invention is provided.

In a preferred embodiment of the method according to the present invention the frame is pivotally attachable to said basis for pivoting the frame from a first position in which the frame extends substantially horizontal to a second position in which the frame extends substantially vertical.

The invention will now be explained in more detail with reference to an exemplary embodiment shown in the appended figures, in which:
Figure 1 shows schematically a conventional electricity pylon having cable supporting arms,
figure 2 shows schematically a wind power installation according to the invention,
figure 3 shows schematically a wind power installation according to the invention during assembling,
figure 4 shows schematically a wind power installation according to the invention during assembling,
figure 5 shows schematically an assembled wind power installation according to the invention,
figure 6 shows schematically an alternative wind power installation according to the invention,

Like parts are indicated by the same numerals in the various figures.

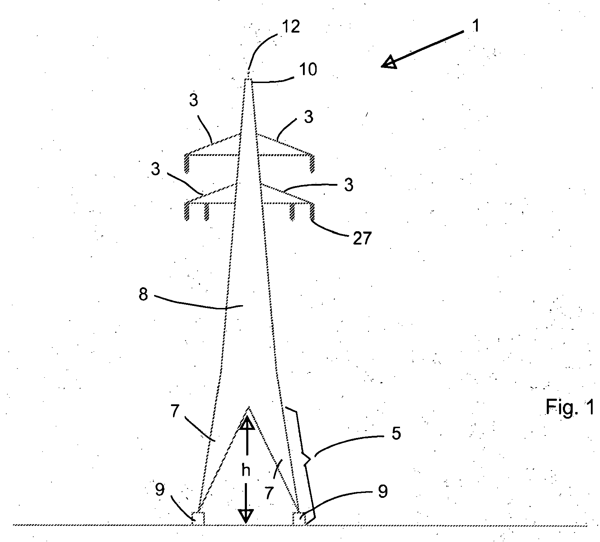

A conventional electricity pylon 1 having cable supporting arms 3 is shown in figure 1. The electricity pylon 1 shown comprises a pyramid shaped basis 5 comprising four supports 7 (of which only two are shown in figure 1) that are anchored in foundation elements 9, of which only the part above ground level 11 is shown. The supports 7 turn into the mast 8, at a height h where the supports meet each other. On an opposite top end 10 of the mast a lightning deflector 12 is arranged.

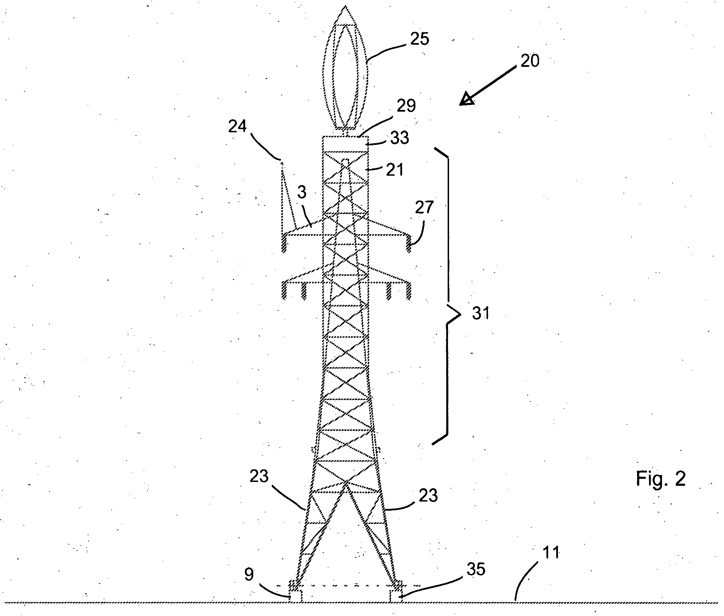

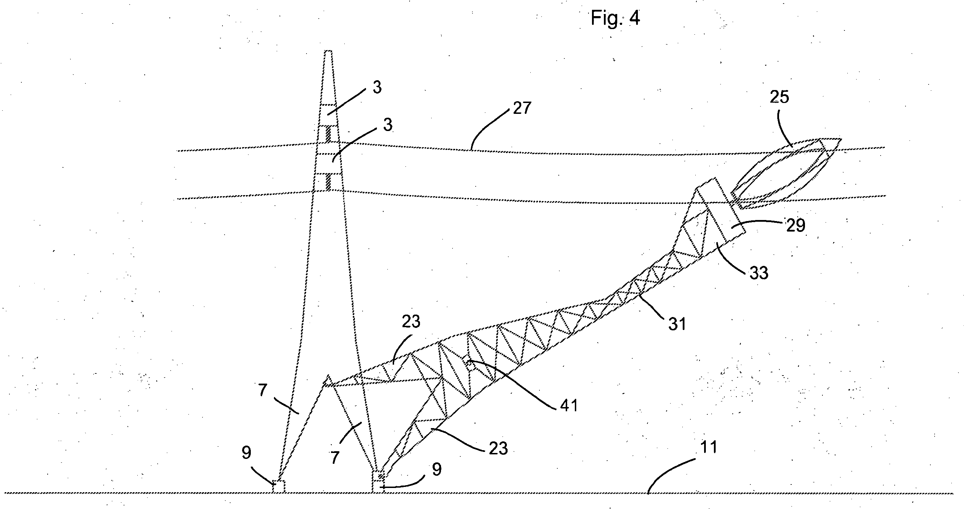

Figures 2-5 show a first embodiment of a wind power installation 20 according to the invention. The wind power installation 20 comprises a frame 21 and an electricity pylon 1. The frame 21 comprises four supporting members 23 (only two are shown in each figure) which during assembling are mountable over the supports 7 of said electricity pylon 1 for fixing these supporting members 23 foundation elements 9 of said electricity pylon 1 to provide an independent frame 21 for carrying a vertical axis wind turbine 25 of the Darrieus type above cable supporting arms 3 of said electricity pylon 1. As an option the frame 21 may also be connected to the supports 7. The lightning deflector 24 has been moved to an arm 3 of the electricity pylon 1.

The wind turbine 25, 51 comprises a compartment 29 housing technical equipment (not shown) for converting wind energy into electricity. Further this compartment comprises connectors for providing a connection with the cables 27 of the electricity network such that electricity generated by means of the wind turbine is able to be transported into the electricity network. After the wind installation is installed and before said connection between the cables and the wind turbine is established the cables must be temporarily be cut off from the electricity network. The moment that the electricity transport is shut down may be chosen and therefore its economic impact is minimized.

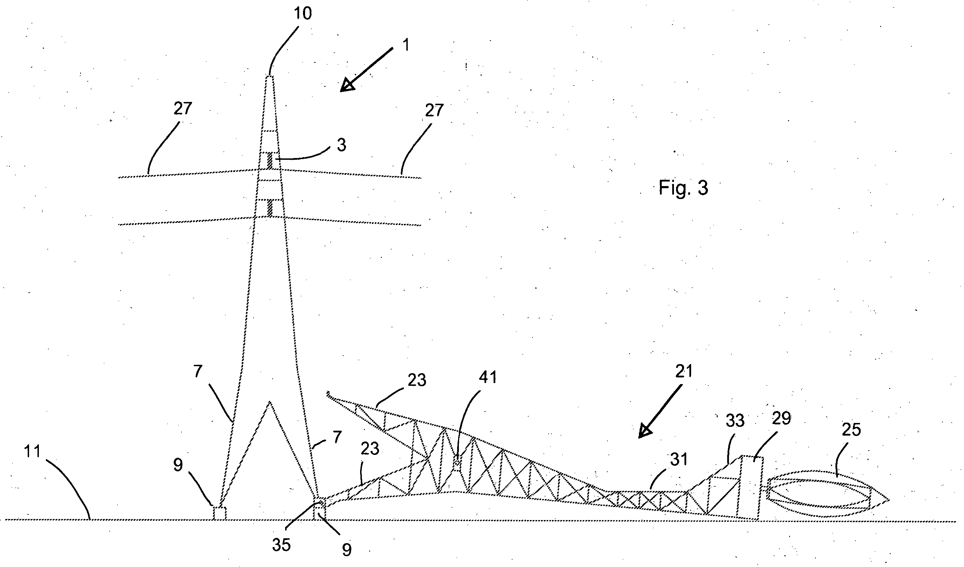

The frame 21 is dimensioned such that the supporting members 23 are fixed to the foundation members 9 in such a way that all supporting members 23 are located outside the electricity pylon 1. The frame 21 has a lambda shape in a side view as shown in figure 3 such that a stable basis is provided by means of the supporting members 23 for the wind turbine to be carried above the cable supporting arms 3 of the electricity pylon 1. The supporting members 23 extend into a mid-section 31 of the frame 21 which mid-section 31 extends into a top section 33 supporting the compartment 29 and the wind turbine 25. Preferably, the top section 29 in the second position of the frame 21 is situated such that the main axis of the wind turbine 25 coincides with the main axis of the electricity pylon 1.

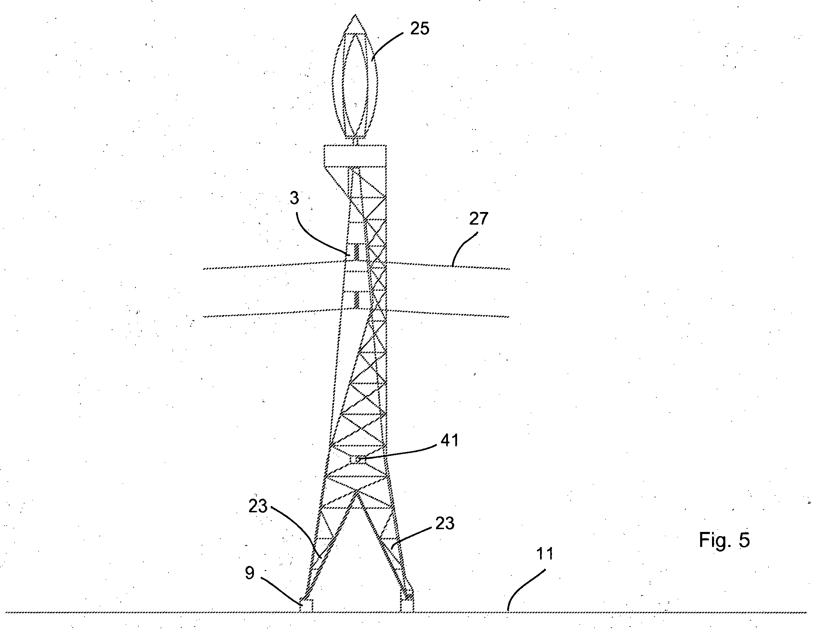

Two supporting members 23 are pivotally attachable to the supports 7 and the foundation elements 9 such that the frame is pivotally moveable about a pivot axis 35 from a first position (figure 3) in which the frame 21 extends substantially horizontal to a second position (figures 2 and 5) in which the frame 21 extends substantially vertical. For pivoting, the frame 21 comprises a leverage connector 41 to which a hydraulic operated apparatus may be connected for erecting the frame 21 from the first position to the second position or vice versa.

Preferably, detachably coupling means (not shown) are used to fix the supporting members 23 to the foundation elements 9. In addition, quick couplings may be used to couple other parts of the frame 21 with the electricity pylon 1. In this way it is also possible for maintenance purposes or replacement purposes to detach the couplings and coupling means such that the frame 21 with the wind turbine 25 may be pivoted back from the second position to the first position.

.As can be seen in figure 2, the mid-section 31 and the top section 33 comprising the wind turbine 25 are dimensioned such that these parts can pass during pivoting between a first position and a second position and vice versa, the electric cables 27 freely without hindrance, such that the electricity pylon 1 may be in use during assembling, maintenance or during erecting of the wind power installation 20.

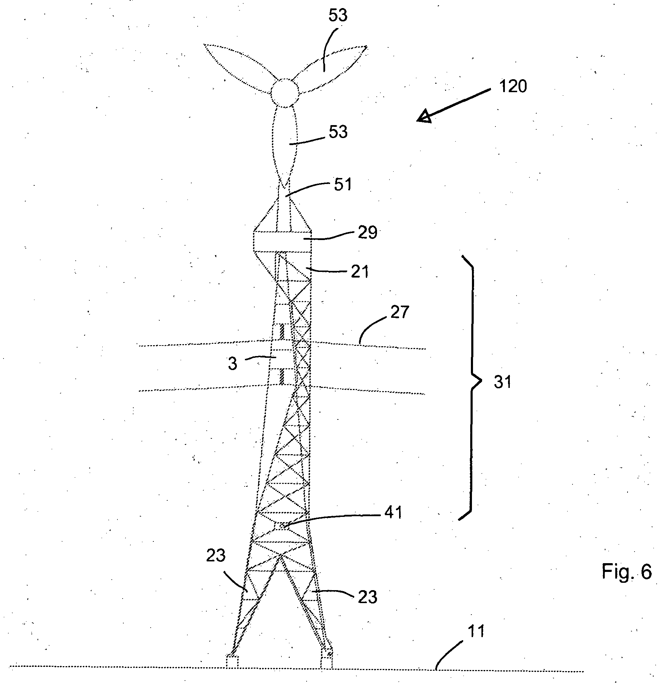

Figure 6 shows a horizontal axis wind turbine 51 carried by the frame 21 according to the present invention. All other aspects of this embodiment of the wind power installation 120 are the same as in figures 2-5. During mounting.the frame 21 over the electricity pylon 1, the wind blades 53 of the horizontal wind axis turbine 51 may be aligned and temporarily fixed into a safe orientation for passing the electricity cables 27.

## Claims

1. A wind power installation (20, 120) comprising a frame (21) and an electricity pylon (1) comprising near ground level an at least partly pyramid shaped basis (5) for supporting a mast (8) carrying cable supporting arms (3), which basis comprises supports (7) anchored in foundation elements (9), **characterized in that**, the frame comprises supporting members (23) which are at least partly mounted over the basis of said electricity pylon wherein the supporting members are fixed to the foundation elements such that the frame carries a wind turbine (25, 51) above cable supporting arms of said electricity pylon independently.

2. A wind power installation (20, 120) according to claim 1, **characterized in that** at least one supporting member is pivotally attachable about a pivot axis (35) to the basis in such a way that the frame is movably by pivoting the frame over said pivot axis from a first position in which the frame extends substantially horizontal to a second position in which the frame extends substantially vertical.

3. A wind power installation (20, 120) according to claim 2, **characterized in that** in the second position all supporting members of the frame are detachably fixable to the foundation elements.

4. A wind power installation (20, 120) according to claim 2 or 3, **characterized in that** in the second position the frame may be detachably attached to the basis and/or the mast of said electricity pylon.

5. A wind power installation (20, 120) according to any preceding claim, **characterized in that** the frame is dimensioned such that the supporting members of the frame are able to at least partly surround said electricity pylon and a part of the frame above the supporting members is dimensioned such that this part is able to be mounted between electricity cables (27) carried by cable supporting arms of said electricity pylons.

6. Method for assembling a wind power installation (20, 120) comprising the following steps:
- at least partly mounting a frame comprising supporting members over an at least partly pyramid shaped basis of an electricity pylon which basis comprises supports anchored in foundation elements of said electricity pylon, which frame in its substantially vertically erected state carries a wind turbine above cable supporting arms of said electricity pylon,
- fixing these supporting members of the frame to the foundation elements of said electricity pylon.

7. Method for producing a wind power installation (20, 120) according to claim 6, **characterized in that** the frame is pivotally attachable to said basis for pivoting the frame from a first position in which the frame extends substantially horizontal to a second position in which the frame extends substantially vertical.

## Patentansprüche

1. Windkraftanlage (20, 120) mit einem Rahmen (21) und einem Strommast (1), der in Bodennähe eine zumindest teilweise pyramidenförmige Basis (5) zum Tragen eines Masts (8), der Kabeltragarme (3) trägt, aufweist, wobei die Basis Stützen (7) umfasst, die in Fundamentelementen (9) verankert sind, **dadurch gekennzeichnet, dass** der Rahmen Stützelemente (23) umfasst, die zumindest teilweise über der Basis des Strommasts angebracht sind, wobei die Stützelemente derart an den Fundamentelementen fixiert sind, dass der Rahmen eigenständig eine Windturbine (25, 51) oberhalb der Kabeltragarme des Strommasts trägt.

2. Windkraftanlage (20, 120) nach Anspruch 1, **dadurch gekennzeichnet, dass** wenigstens ein Stützelement derart um eine Schwenkachse (35) schwenkbar an der Basis befestigbar ist, dass der Rahmen bewegbar ist, indem der Rahmen über die Schwenkachse aus einer ersten Position, in der sich der Rahmen im Wesentlichen horizontal erstreckt, in eine zweite Position geschwenkt wird, in der sich der Rahmen im Wesentlichen vertikal erstreckt.

3. Windkraftanlage (20, 120) nach Anspruch 2, **dadurch gekennzeichnet, dass** in der zweiten Position alle Stützelemente des Rahmens lösbar an den Fundamentelementen fixierbar sind.

4. Windkraftanlage (20, 120) nach Anspruch 2 oder 3, **dadurch gekennzeichnet, dass** in der zweiten Position der Rahmen lösbar an der Basis und/oder dem Mast des Strommasts befestigt sein kann.

5. Windkraftanlage (20, 120) nach einem vorhergehenden Anspruch, **dadurch gekennzeichnet, dass** der Rahmen so dimensioniert ist, dass die Stützelemente des Rahmens den Strommast zumindest teilweise umgeben können, und ein Abschnitt des Rahmens oberhalb der Stützelemente so dimensioniert ist, dass dieser Abschnitt zwischen Stromkabeln (27) angebracht werden kann, die von Kabeltragarmen der Strommasten getragen werden.

6. Verfahren zur Montage einer Windkraftanlage (20, 120) mit den folgenden Schritten:
- zumindest teilweises Anbringen eines Rahmens mit Stützelementen über einer zumindest teilweise pyramidenförmigen Basis eines Strommasts, wobei die Basis Stützen umfasst, die in Fundamentelementen des Strommasts verankert sind, wobei der Rahmen in seinem im Wesentlichen vertikal aufgerichteten Zustand eine Windturbine oberhalb von Kabeltragarmen des Strommasts trägt,
- Fixieren dieser Stützelemente des Rahmens an den Fundamentelementen des Strommasts.

7. Verfahren zur Herstellung einer Windkraftanlage (20, 120) nach Anspruch 6, **dadurch gekennzeichnet, dass** der Rahmen schwenkbar an der Basis befestigbar ist, um den Rahmen aus einer ersten Position, in der sich der Rahmen im Wesentlichen horizontal erstreckt, in eine zweite Position zu schwenken, in der sich der Rahmen im Wesentlichen vertikal erstreckt.

## Revendications

1. Installation d'énergie éolienne (20, 120) comprenant un châssis (21) et un pylône électrique (1) comprenant près du niveau du sol une base au moins partiellement en forme de pyramide (5) pour supporter un mât (8) portant des bras de support de câble (3), ladite base comprenant des supports (7) ancrés dans des éléments de fondation (9), **caractérisée en ce que** le châssis comprend des organes de support (23) qui sont au moins partiellement montés sur la base dudit pylône électrique où les organes de support sont fixés aux éléments de fondation de sorte que le châssis porte une turbine éolienne (25, 51) au-dessus des bras de support de câble dudit pylône électrique indépendamment.

2. Installation d'énergie éolienne (20, 120) selon la revendication 1, **caractérisée en ce qu'**au moins un organe de support est attaché en pivotement autour d'un axe de pivotement (35) à la base de manière à ce que le châssis soit mobile par pivotement du châssis sur ledit axe de pivotement d'une première position dans laquelle le châssis s'étend essentiellement horizontalement à une deuxième position dans laquelle le châssis s'étend essentiellement verticalement.

3. Installation d'énergie éolienne (20, 120) selon la revendication 2, **caractérisée en ce que** dans la deuxième position tous les organes de support du châssis peuvent être fixés de manière amovible aux éléments de fondation.

4. Installation d'énergie éolienne (20, 120) selon la revendication 2 ou 3, **caractérisée en ce que** dans la deuxième position, le châssis peut être attaché de manière amovible à la base et/ou au mât dudit pylône électrique.

5. Installation d'énergie éolienne (20, 120) selon l'une des revendications précédentes, **caractérisée en ce que** le châssis est dimensionné de sorte que les organes de support du châssis soient capables d'entourer au moins partiellement ledit pylône électrique et une partie du châssis au-dessus des organes de support est dimensionnée de sorte que cette partie soit capable d'être montée entre des câbles électriques (27) portés par des bras de support de câble desdits pylônes électriques.

6. Procédé pour assembler une installation d'énergie éolienne (20, 120) comprenant les étapes suivantes qui consistent :
- à monter au moins partiellement un châssis comprenant des organes de support sur une base au moins partiellement en forme de pyramide d'un pylône électrique, ladite base comprenant des supports ancrés dans des éléments de fondation dudit pylône électrique, lequel châssis dans son état dressé essentiellement verticalement porte une turbine éolienne au-dessus des bras de support de câble dudit pylône électrique,
- à fixer ces organes de support du châssis aux éléments de fondation dudit pylône électrique.

7. Procédé pour produire une installation d'énergie éolienne (20, 120) selon la revendication 6, **caractérisé en ce que** le châssis peut être attaché en pivotement à ladite base pour faire pivoter le châssis d'une première position dans laquelle le châssis s'étend essentiellement horizontalement à une deuxième position dans laquelle le châssis s'étend essentiellement verticalement.
